# EUROPEAN PATENT SPECIFICATION

(11) **EP 4 033 726 B1**
(45) Date of publication and mention of the grant of the patent: **17.04.2024**
(21) Application number: 21153037.3
(22) Date of filing: 22.01.2021
(51) Int. Cl.: H04L 67/10, H04L 67/00

(54) **SYSTEMS AND METHODS FOR SERVER PROVISIONING**
SYSTEME UND VERFAHREN ZUR SERVERBEREITSTELLUNG
SYSTÈMES ET PROCÉDÉS D'APPROVISIONNEMENT DE SERVEUR

(43) Date of publication of application: 27.07.2022
(73) Proprietor: ATOS France, 95870 Bezons (FR)
(72) Inventor: SINHA, Ritesh, 248001 Dehradun, Uttarakhand (IN)
(74) Representative: Novagraaf Technologies

(56) References cited:
- US-A1- 2014 149 492
- US-A1- 2016 335 113
- US-A9- 2016 321 572

## Description

### TECHNICAL FIELD

The present disclosure generally relates to systems and methods for server provisioning. In particular, the systems and methods relate to automatically provisioning a server device.

### BACKGROUND

Servers provide computing resources and space to host data, services, or software programs to computing devices, known as clients, over a network. The servers may be hosted across one or more types of server structures, hardware, or platforms such as physical servers, cloud servers hosted in cloud computing environments, virtualization servers, on-premise servers, dedicated or bare-metal servers, datacenters comprising a large number of interconnected servers, and various others. Further, based on usage requirements, servers are configured to perform different functions. Some examples of servers configured based on usage requirements include but are not limited to file servers, applications servers, mail servers, web servers, database servers, proxy servers, and various other types of servers. Server provisioning is a process of setting up a server to be used in a network based on required resources. The server provisioning may encompass one or more operations to set up a new machine and configure the machine to a working state, and include one or more applications as per a requirement of a client.

Server provisioning may be required in cases, such as when new servers are added to a data center or new servers are to be built and setup, for example, when servers are re-configured to change their function, when servers are migrated from one platform to another, when servers are upgraded to install additional software programs and install software and operating system updates, or when servers are disconnected and reconnected, e.g., for hardware maintenance. Server provisioning may require setting up a required operating system (OS) according to client requirements such as functions to be performed, computing resources required, and tools and software programs required along with the OS. In some cases, server provisioning may require deploying a hypervisor on the server to create and run multiple virtual machines (VMs).

Conventional systems and methods for server provisioning incur high cost and require significant time for generating OS images and require manual intervention at various steps such as installing supporting tools and software programs, which may result in inconsistent builds and server deployment. Also, with multiple vendors, technologies and tools, organizations struggle to choose and manage the multiple vendors, technologies and tools over a period of time. Organizations or businesses owning or otherwise managing a large number of servers located across geographic locations or datacenters having multiple interconnected servers may spend significant time and cost in provisioning the servers as per the requirements of the customers. Further, organizations owning multiple servers or datacenters for their internal use may spend significant time and cost in provisioning the servers using conventional systems and methods for server provisioning. Furthermore, the servers may be spread across various platforms, such as on-premise servers or cloud servers, which may be accessed via private and secured networks, thus making it even more challenging for consistent and efficient server provisioning.

American patent application US 2014/149492 A1 describes a system for provisioning a server. A request, comprising parameters, is made to a provisioning engine, that uses a catalogue , to create the server instance.

Accordingly, it is one object of the present disclosure to provide systems and methods for server provisioning that saves significant time and cost required to provision servers.

### SUMMARY

The present invention generally relates to systems and methods for server provisioning.

In an example embodiment, a method for automatically provisioning a server is described, which includes receiving, by a server provisioning engine, a server provisioning request from a requestor via a self-service portal. The server provisioning request includes one or more requirements associated with an operating system (OS) image and one or more preferences for configuring the OS image. The method further includes searching, by the server provisioning engine, a state database for the OS image that meets the one or more requirements. The method further includes generating, by the server provisioning engine, the OS image in accordance with the one or more requirements when the OS image is not found in the state database. Further, the method includes configuring, by the server provisioning engine, the OS image with the one or more preferences. The method further includes performing, by the server provisioning engine, at least one of: sharing the configured OS image with the requestor and deploying the server using the configured OS image.

In some implementations, the method includes updating, by the server provisioning engine, configuration items (CI) associated with provisioning the server in a Configuration Management Database (CMDB).

In some implementations, the method includes generating, by the server provisioning engine, a documentation associated with provisioning the server. The documentation includes one or more of: work instructions associated with configuring the server, High Level Design (HLD), Built Installation Guides (BIG), Technical Security Standards (TSS), escalation matrix, and training material associated with provisioning the server. The method further includes sharing, by the server provisioning engine, the documentation with the requestor via the self-service portal.

In some implementations, the method includes generating, by the server provisioning engine, multiple instances of one or more orchestration tools for provisioning the server.

In some implementations, the method includes assigning, by the server provisioning engine, a dedicated task associated with provisioning the server to each of one or more orchestration tools.

In some implementations, the one or more preferences include selection of a preferred patch management software program from one or more patch management software programs, a preferred artificial intelligence software program from one or more artificial intelligence software programs, a preferred machine learning software program from one or more machine learning software programs, a preferred server monitoring software program from one or more server monitoring software programs, a preferred antivirus software program from one or more antivirus software programs, and a preferred server hardening standard from one or more server hardening standards.

In some implementations, deploying the server includes deploying a hypervisor on the server to create and run one or more virtual machines (VMs) on the server. The configured OS image is used by the one or more VMs.

In another example implementation, a system for automatically provisioning a server is described. The system includes a server provisioning engine. The server provisioning engine receives a server provisioning request from a requestor via a self-service portal. The server provisioning request includes one or more requirements associated with an operating system (OS) image and one or more preferences for configuring the OS image. The server provisioning engine searches a state database for the OS image that meets the one or more requirements. The server provisioning engine generates the OS image in accordance with the one or more requirements when the OS image is not found in the state database. Further, the server provisioning engine configures the OS image with the one or more preferences. Further, the server provisioning engine performs at least one of: shares the configured OS image with the requestor and deploys the server using the configured OS image.

In some implementations, the server provisioning engine includes the state database storing OS images and one or more repositories storing at least one of OS image templates, supporting tools and software programs, and playbooks. The server provisioning engine generates the OS image and configures the OS image based on the at least one of the OS image templates, the supporting tools and software programs, and the playbooks.

In some implementations, the self-service portal includes a user interface for the requestor to select the one or more requirements and the one or more preferences.

In some implementations, the server provisioning engine updates configuration items (CI) associated with provisioning the server in a Configuration Management Database (CMDB).

In some implementations, the server provisioning engine generates a documentation associated with provisioning the server. The documentation includes one or more of: work instructions associated with configuring the server, High Level Design (HLD), Built Installation Guides (BIG), Technical Security Standards (TSS), escalation matrix, and training material associated with provisioning the server. Further, the server provisioning engine shares the documentation with the requestor via the self-service portal.

In some implementations, the server provisioning engine includes a plurality of orchestration tools. Each of the plurality of orchestration tools is assigned a dedicated task associated with provisioning the server.

In some implementations, the server provisioning engine generates multiple instances of one or more orchestration tools of the plurality of orchestration tools.

In some implementations, the one or more preferences include selection of a preferred patch management software program from one or more patching management software programs, a preferred artificial intelligence software program from one or more artificial intelligence software programs, a preferred machine learning software program from one or more machine learning software programs, a preferred server monitoring software program from one or more server monitoring software programs, a preferred antivirus software program from one or more antivirus software programs, and a preferred server hardening standard from one or more server hardening standards.

Other aspects and advantages of the disclosure will become apparent from the following detailed description, taken in conjunction with the accompanying drawings, which illustrate by way of example the teachings of the disclosure, and are not restrictive.

### BRIEF DESCRIPTION OF THE DRAWINGS

A more complete appreciation of this disclosure and many of the attendant advantages thereof will be readily obtained as the same becomes better understood by reference to the following detailed description when considered in connection with the accompanying drawings, wherein:
FIG. 1 is a block diagram depicting an embodiment of a network environment comprising client devices, cloud service providers, and server devices, according to some embodiments;
FIG. 2 is a block diagram depicting embodiments of computing devices useful in connection with the methods and systems described herein, according to some embodiments;
FIG. 3 depicts an implementation of some of the architecture of an implementation of a system for provisioning a server, according to some embodiments;
FIG. 4 depicts a process flow for provisioning a server, according to some embodiments.

### DETAILED DESCRIPTION

Prior to discussing specific embodiments of the present solution, it may be helpful to describe aspects of the operating environment as well as associated system components (e.g., hardware elements) in connection with the methods and systems described herein.

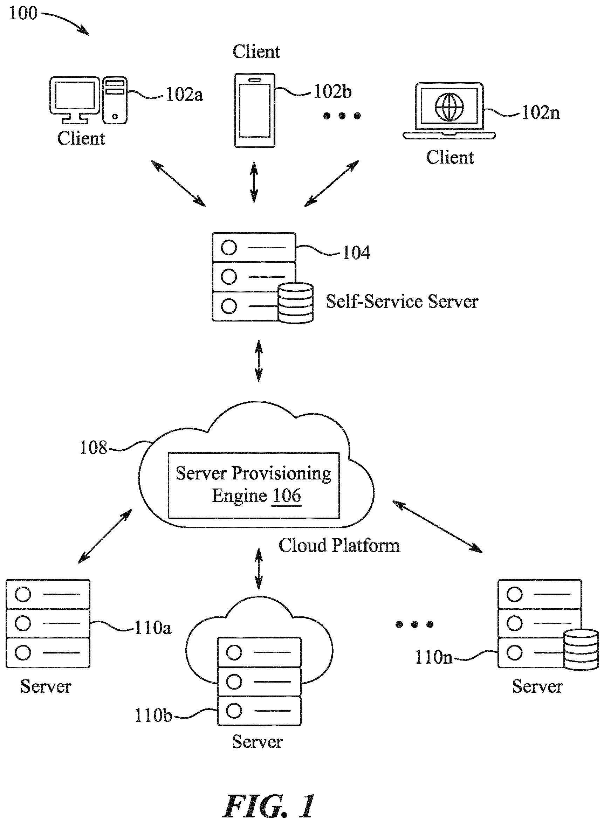

Referring to FIG. 1, an embodiment of a network environment 100 is depicted. In a brief overview, network environment 100 includes one or more clients 102a - 102n (hereinafter collectively referred to as client devices 102 or clients 102, and individually referred to as client device 102 or client 102) and self-service server 104 in communication with clients 102 via one or more networks (not shown). Network environment 100 further includes server provisioning engine 106 in communication with self-service server 104 via the one or more networks.

In some embodiments, client 102 may function as both a client node seeking access to resources provided by a server and as a server providing access to hosted resources for other clients 102a -102n.

In some embodiments, self-service server 104 may be a dedicated physical server or a virtual server owned or managed or otherwise associated with an organization or any entity providing self-service such as Information Technology Service Management (ITSM). In some embodiments, self-service server 104 may be a cloud server running in a cloud environment hosted via a cloud computing platform. Self-service server 104 may provide a platform to place service requests, raise tickets on IT issues, ticket management, and reporting.

Network environment 100 may further include server provisioning engine 106. Server provisioning engine 106 may provision one or more of servers 110. Provisioning a server is a process of setting up a server to be used in a network based on required resources. According to an embodiment, server provisioning engine 106 may provision one or more of servers 110 by setting up an operating system (OS) image and configuring the OS image with one or more supporting tools and software. Server provisioning engine 106 may further deploy one or more of servers 110 using the configured OS. In some implementations, server provisioning engine 106 may upgrade one or more of servers 110 or migrate one or more of servers 110. In an embodiment, server provisioning engine 106 may be hosted on a cloud platform 108. Network environment 100 further includes one or more server(s) 110a - 110n (hereinafter collectively referred to as server devices 110 or servers 110, and individually referred to as server device 110 or server 110) in communication with server provisioning engine 106 via the one or more networks.

In some embodiments, cloud platform 108 may refer to a suite of cloud computing services provided by various cloud service providers including, but not limited to, Google Cloud Platform^{®} service, Amazon Web Services^{™} (AWS), Microsoft Azure^{®}, IBM Cloud^{®}, Oracle Cloud^{®}, Dell Cloud^{®}, and VMware^{®}.

The one or more networks may be connected via wired or wireless links. Wired links may include Digital Subscriber Line (DSL), coaxial cable lines, or optical fiber lines. Wireless links may include Bluetooth^{®}, Bluetooth Low Energy (BLE), ANT/ANT+, ZigBee, Z-Wave, Thread, Wi-Fi^{®}, Worldwide Interoperability for Microwave Access (WiMAX^{®}), mobile WiMAX^{®}, WiMAX^{®-}Advanced, NFC, SigFox, LoRa, Random Phase Multiple Access (RPMA), Weightless-N/P/W, an infrared channel or a satellite band. The wireless links may also include any cellular network standards to communicate among mobile devices, including standards that qualify as 1G, 2G, 3G, 4G, 5G or any other standard. The network standards may qualify as one or more generations of mobile telecommunication standards by fulfilling a specification or standards such as the specifications maintained by the International Telecommunication Union. The 3G standards, for example, may correspond to the International Mobile Telecommunications-2000 (IMT-2000) specification, and the 4G standards may correspond to the International Mobile Telecommunication Advanced (IMT-Advanced) specification. Examples of cellular network standards include AMPS, GSM, GPRS, UMTS, CDMA2000, CDMA-1xRTT, CDMA-EVDO, LTE, LTE-Advanced, LTE-M1, and Narrowband IoT (NB-IoT). Wireless standards may use various channel access methods, e.g., FDMA, TDMA, CDMA, or SDMA. In some embodiments, different types of data may be transmitted via different links and standards. In other embodiments, the same types of data may be transmitted via different links and standards.

The one or more networks may be any type and/or form of network. The geographical scope of the network may vary widely, and the one or more networks can be a body area network (BAN), a personal area network (PAN), a local-area network (LAN), e.g., Intranet, a metropolitan area network (MAN), a wide area network (WAN), or the Internet. The topology of one or more networks may be of any form and may include, e.g., any of the following: point-to-point, bus, star, ring, mesh, or tree. The one or more networks may be an overlay network that is virtual and sits on top of one or more layers of other networks. The one or more networks may be of any such network topology as known to those ordinarily skilled in the art capable of supporting the operations described herein. The one or more networks may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol. The TCP/IP internet protocol suite may include application layer, transport layer, internet layer (including, e.g., IPv4 and IPv6), or the link layer. The one or more networks may be a type of broadcast network, a telecommunications network, a data communication network, or a computer network.

In some embodiments, servers 110a-110n may be logically grouped. In an embodiment, the logically grouped servers may be referred to as a server farm or a machine farm. In another embodiment, servers 110a-110n may be geographically dispersed. In another embodiment, a machine farm may be administered as a single entity. In some implementations, the machine farm includes a plurality of machine farms. Servers 110 logically grouped as a machine farm may be interconnected using a wide-area network (WAN) connection or a metropolitan-area network (MAN) connection. Servers 110 within each machine farm may be heterogeneous, wherein one or more servers of servers 110 may operate according to one type of operating system platform, while one or more other servers of servers 110 may operate according to another type of operating system platform. In some embodiments, a machine farm may include one or more servers executing one or more types of hypervisors. In an embodiment, hypervisors may be used to emulate virtual hardware, partition physical hardware, virtualize physical hardware, and execute virtual machines that provide access to computing environments, allowing multiple operating systems to run concurrently on a host computer. Native hypervisors may run directly on the host computer. Examples of the hypervisors may include but are not limited to VMware ESX^{®}/VMware ESXi^{™}, Xen^{®} hypervisor, and Microsoft^{®} Hyper-V^{™} hypervisors. Hosted hypervisors may run within an operating system on a second software level. Examples of hosted hypervisors may include VMware Workstation Pro^{™} and Oracle^{®} VirtualBox^{®}.

In some embodiments, additional layers of abstraction may include Container Virtualization and Management Infrastructure. Container Virtualization isolates execution of a service to the container while relaying instructions to the machine through one operating system layer per host machine. In an implementation, container infrastructure may be implemented using Docker^{™}, an open-source product whose development is overseen by Docker, Inc. of San Francisco, California.

Servers 110 may be one or more of file servers, application servers, web servers, proxy servers, appliances, network appliances, gateway servers, virtualization servers, deployment servers, SSL VPN servers, or firewalls. In some embodiments, servers 110 may correspond to different data centers, each data center including one or more of servers 110a-n. In some embodiments, one or more of servers 110a-n may be physical servers serving a dedicated customer or user, on-premise servers installed at customer facility, virtualization servers hosting a plurality of virtual machines (VMs), or hybrid servers i.e. physically hosted servers with virtualization technology. Furthermore, in some embodiments, one or more of servers 110a-n may be hosted in cloud computing platforms provided by various cloud service providers such as, Google Cloud Platform^{™}, Amazon Web Services^{™} (AWS), Microsoft Azure^{®}, IBM Cloud^{®}, Oracle Cloud^{®}, Dell Cloud^{®}, and VMware^{®}. Cloud computing platforms may include back end platforms, e.g., server devices, server farms, data centers, or storage.

Cloud platform 108 may be a public cloud, a private cloud, or a hybrid cloud. In public clouds, the cloud resources (e.g., servers and storage) are owned and operated by third-party cloud service providers and may be shared by more than one organization, business, or user. The cloud resources may be located off-site and delivered over a public network such as the Internet. With a public cloud, all hardware, software, and other supporting infrastructure may be owned and managed by the cloud service provider. Private clouds may include cloud resources used exclusively by one business or organization. The private cloud may be physically located at the organization's on-site datacenter or may be hosted by a third-party service provider. With a private cloud, the cloud resources may be delivered over a private network. A hybrid cloud is a type of cloud computing that combines a private cloud with a public cloud and may include both the private and public networks. Hybrid clouds allow data and applications to move between the two cloud environments. In an embodiment, server provisioning engine 106 and one or more of servers 110a-n may be hosted in a cloud computing platform provided by a same cloud service provider or different cloud service providers.

Cloud platform 108 may also include a cloud-based delivery, e.g., Infrastructure as a Service (IaaS), Platform as a Service (PaaS), and Software as a Service (SaaS). IaaS may refer to a user renting infrastructure resources that are needed during a specified time period. An IaaS provider may offer storage, networking, servers or virtualization resources from large pools, allowing the users to quickly scale up by accessing more resources as needed. Examples of IaaS providers include Amazon Web Services^{®} (AWS), Rackspace^{™} Cloud, Google Compute Engine^{™}, or RightScale^{™}. PaaS may offer functionality associated with various cloud resources, including, e.g., storage, networking, servers, virtualization or containerization, as well as additional resources, e.g., operating system, middleware, or runtime resources. PaaS may deliver a framework that developers may build upon and use to create applications. Examples of PaaS providers include Windows Azure^{™}, Google App Engine^{™}, and Heroku^{™}. SaaS may offer the resources, including storage, networking, servers, virtualization, operating system, middleware, or runtime resources. In some embodiment, SaaS may offer additional resources including, e.g., data and application resources. Examples of SaaS providers include Google Apps^{™}, Salesforce^{®}, or Office365^{™}. Examples of SaaS providers may also include storage providers, e.g., Dropbox^{™}, Microsoft OneDrive^{™}, Google Drive^{™}, or Apple iCloud^{™}.

Clients 102, self-service server 104, and servers 110 may be deployed as and/or executed on any type and form of computing device, e.g., a computer, network device or appliance capable of communicating on any type and form of network and performing the operations described herein.

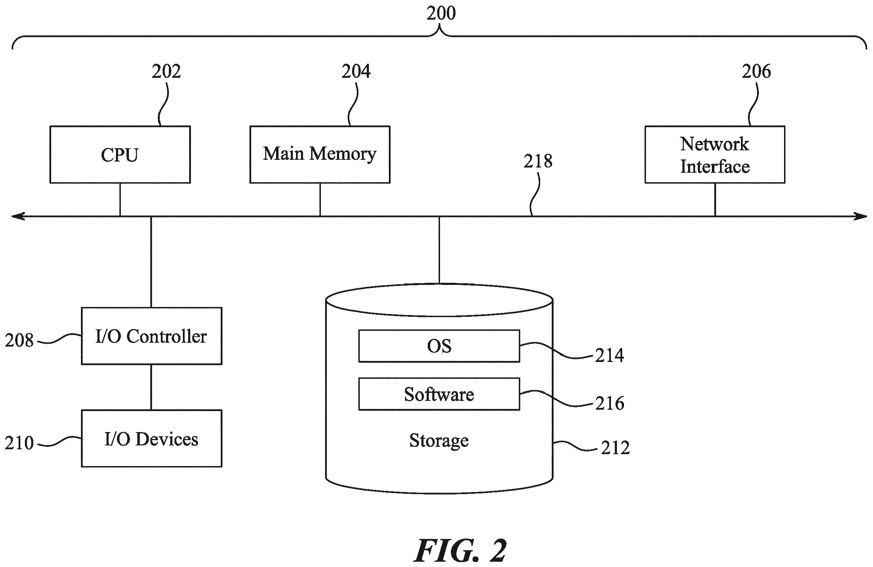

FIG. 2 depicts a block diagram of computing device 200 useful for practicing an embodiment of client 102, self-service server 104, or server 110. As shown in FIG. 2, each computing device 200 includes central processing unit (CPU) 202 and main memory unit 204. Computing device 200 may further include network interface 206, I/O controller 208, I/O devices 210, storage device 212, and system bus 218. Storage device 212 may include, without limitation, operating system 214 and software 216.

CPU 202 is any logic circuitry that responds to and processes instructions fetched from main memory unit 204. In many embodiments, CPU 202 is provided by a microprocessor unit, e.g., those manufactured by Intel Corporation of Mountain View, California; those manufactured by Motorola Corporation of Schaumburg, Illinois; the Arm^{®} processor and Tegra^{®} system on a chip (SoC) manufactured by Nvidia of Santa Clara, California; the POWER7^{®} processor, those manufactured by International Business Machines of White Plains, New York; or those manufactured by Advanced Micro Devices of Sunnyvale, California. Computing device 200 may be based on any of these processors, or any other processor capable of operating as described herein. CPU 202 may utilize instruction-level parallelism, thread-level parallelism, different levels of cache, and multi-core processors. A multi-core processor may include two or more processing units on a single computing component. Examples of multi-core processors include the AMD Phenom^{®} IIX2, Intel^{®} Core^{®} i5 and Intel^{®} Core^{®} i7.

Main memory unit 204 may include one or more memory chips capable of storing data and allowing any storage location to be directly accessed by CPU 202. Main memory unit 204 may be volatile and faster than storage device 212. Main memory unit 204 may be Dynamic Random-Access Memory (DRAM) or any variants, including static Random-Access Memory (SRAM), Burst SRAM or SynchBurst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, main memory unit 204 or storage device 212 may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. Main memory unit 204 may be based on any of the above-described memory chips or any other available memory chips capable of operating as described herein. CPU 202 communicates with main memory unit 204 via system bus 218. In an embodiment, CPU 202 may communicate directly with main memory unit 204 via a memory port on CPU 202.

CPU 202 communicates with various I/O devices 210 via system bus 218. Various buses may be used to connect CPU 202 to any of I/O devices 210, including a PCI bus, a PCI-X bus, or a PCI-Express bus, or a NuBus. For embodiments in which I/O device 210 is a video display device, CPU 202 may use an Advanced Graphic Port (AGP) to communicate with the video display device or I/O controller 208 for the video display device. In an embodiment, CPU 202 may communicate directly with I/O devices 210 via HYPERTRANSPORT, RAPIDIO, or INFINIBAND communications technology.

A wide variety of I/O devices 210 may be present in computing device 200. Input devices may include keyboards, mice, trackpads, trackballs, touchpads, touch mice, multi-touch touchpads and touch mice, microphones, multi-array microphones, drawing tablets, cameras, single-lens reflex cameras (SLR), digital SLR (DSLR), CMOS sensors, accelerometers, infrared optical sensors, pressure sensors, magnetometer sensors, angular rate sensors, depth sensors, proximity sensors, ambient light sensors, gyroscopic sensors, or other sensors. Output devices may include video displays, graphical displays, speakers, headphones, inkjet printers, laser printers, and 3D printers.

I/O devices 210 may include a combination of multiple input or output devices, including, e.g., Microsoft^{®} KINECT^{™}, Nintendo Wiimote^{®} for the WII, Nintendo WII U GAMEPAD^{®}, or Apple iPhone^{®}. Some I/O devices 210 may allow gesture recognition inputs through combining some of the inputs and outputs. Some I/O devices 210 provide for facial recognition, which may be utilized as an input for different purposes including authentication and other commands. Some I/O devices 210 provide for voice recognition and inputs, including, e.g., Microsoft^{®} KINECT^{™}, SIRI^{®} for iPhone^{®} by Apple, Google Now^{®} or Google Voice Search^{®}, and Alexa^{®} by Amazon.

I/O devices 210 may have both input and output capabilities, including, e.g., haptic feedback devices, touchscreen displays, or multi-touch displays. Touchscreen, multi-touch displays, touchpads, touch mice, or other touch sensing devices may use different technologies to sense touch, including, e.g., capacitive, surface capacitive, projected capacitive touch (PCT), in cell capacitive, resistive, infrared, waveguide, dispersive signal touch (DST), in-cell optical, surface acoustic wave (SAW), bending wave touch (BWT), or force-based sensing technologies. Some multi-touch devices may allow two or more contact points with the surface, allowing advanced functionality including, e.g., pinch, spread, rotate, scroll, or other gestures. Some touchscreen devices, including, e.g., Microsoft PIXELSENSE^{™} or Multi-Touch Collaboration Wall, may have larger surfaces, such as on a table-top or on a wall, and may also interact with other electronic devices. Some I/O devices 210 may be augmented reality devices. I/O devices 210 may be controlled by I/O controller 208. I/O controller 208 may control one or more I/O devices 210, such as, display devices, keyboard and pointing device, e.g., a mouse or optical pen. In still other embodiments, computing device 200 may provide USB connections (not shown) to receive handheld USB storage devices.

I/O devices 210 such as the display devices may be connected to and controlled via I/O controller 208. Display devices may include, e.g., liquid crystal displays (LCD), thin-film transistor LCD (TFT-LCD), blue phase LCD, electronic papers (e-ink) displays, flexible displays, light-emitting diode displays (LED), digital light processing (DLP) displays, liquid crystal on silicon (LCOS) displays, organic light-emitting diode (OLED) displays, active-matrix organic light-emitting diode (AMOLED) displays, liquid crystal laser displays, time-multiplexed optical shutter (TMOS) displays, or 3D displays. Examples of 3D displays may use, e.g., stereoscopy, polarization filters, active shutters, or auto stereoscopy. Display devices may also be a head-mounted display (HMD). In some embodiments, display devices or the corresponding I/O controller 208 may be controlled through or have hardware support for OPENGL or DIRECTX API or other graphics libraries.

In some embodiments, computing device 200 may include or connect to multiple display devices, which each may be of the same or different type and/or form. As such, any of I/O devices 210 and/or the I/O controller 208 may include any type and/or form of suitable hardware, software, or combination of hardware and software to support, enable or provide for the connection and use of multiple display devices by computing device 200. For example, computing device 200 may include any type and/or form of video adapter, video card, driver, and/or library to interface, communicate, connect or otherwise use display devices. In one embodiment, a video adapter may include multiple connectors to interface to multiple display devices. In other embodiments, computing device 200 may include multiple video adapters, with each video adapter connected to one or more of display devices. In some embodiments, any portion of the operating system of computing device 200 may be configured for using multiple displays. In other embodiments, one or more of the display devices may be provided by one or more other computing devices connected to computing device 200, via the one or more networks. In some embodiments, software may be designed and constructed to use another computer's display device as second display device for computing device 200. For example, in one embodiment, an Apple iPad^{®} may connect to computing device 200 and use the display of computing device 200 as an additional display screen that may be used as an extended desktop. One ordinarily skilled in the art will recognize and appreciate the various ways and embodiments that computing device 200 may be configured to have multiple display devices.

Computing device 200 may comprise storage device 212 (e.g., one or more hard disk drives or redundant arrays of independent disks) for storing operating system 214 or other related software 216, and for storing application software programs such as any program related to self-service portal for ITSM. Examples of storage device 212 include, e.g., hard disk drive (HDD); optical drive including CD drive, DVD drive, or BLU-RAY drive; solid-state drive (SSD); USB flash drive; or any other device suitable for storing data. Some storage device 212 may include multiple volatile and non-volatile memories, including, e.g., solid state hybrid drives that combine hard disks with solid state cache. Some storage device 212 may be non-volatile, mutable, or read-only. Some storage device 212 may be internal and connect to computing device 200 via system bus 218. Some storage device 212 may be external and connect to computing device 200 via I/O device 210 that provides an external bus. Some storage device 212 may connect to computing device 200 via network interface 206 over one or more networks, including, e.g., the Remote Disk for MACBOOK AIR by Apple. Some client devices 102 may not require a non-volatile storage device and may be thin clients or zero clients. Some storage devices 212 may also be used for installing software and programs. Additionally, operating system 214 and software 216 may run from a bootable medium, for example, a bootable CD, e.g., KNOPPIX, a bootable CD for GNU/Linux that is available as a GNU/Linux distribution from knoppix.net.

Computing device 200 (e.g., client device 102) may also install various software programs or applications from an application distribution platform. Examples of application distribution platforms include the App Store for iOS provided by Apple, Inc., the Mac App Store provided by Apple, Inc., GOOGLE PLAY for Android OS provided by Google Inc., Chrome Webstore for CHROME OS provided by Google Inc., and Amazon Appstore for Android OS and KINDLE FIRE provided by Amazon.com, Inc. An application distribution platform may facilitate an installation of software 216 on client device 102. An application distribution platform may include a repository of applications on server or cloud, which clients 102a-102n may access over one or more networks. An application distribution platform may include applications developed and provided by various developers. A user of client device 102 may select, purchase and/or download an application via the application distribution platform.

Furthermore, computing device 200 may include network interface 206 to interface to one or more networks through a variety of connections including, but not limited to, standard telephone lines LAN or WAN links (e.g., 802.11, Tl, T3, Gigabit Ethernet, InfiniBand), broadband connections (e.g., ISDN, Frame Relay, ATM, Gigabit Ethernet, Ethernet-over- SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.1 la/b/g/n/ac CDMA, GSM, WiMAX and direct asynchronous connections). In one embodiment, computing device 200 communicates with other computing devices via any type and/or form of gateway or tunneling protocol, e.g., Secure Socket Layer (SSL) or Transport Layer Security (TLS), or the Citrix Gateway Protocol manufactured by Citrix Systems, Inc. Network interface 206 may comprise a built-in network adapter, network interface card, PCMCIA network card, EXPRESSCARD network card, card bus network adapter, wireless network adapter, USB network adapter, modem or any other device suitable for interfacing computing device 200 to any type of network capable of communication and performing the operations described herein.

Computing device 200 depicted in FIG. 2 may operate under the control of operating system 214, which controls scheduling of tasks and access to system resources. Computing device 200 may run any operating system 214 such as any of the versions of the MICROSOFT WINDOWS operating systems, the different releases of the Unix and Linux operating systems, any version of the MAC OS for Macintosh computers, any embedded operating system, any real-time operating system, any open-source operating system, any proprietary operating system, any operating systems for mobile computing devices, or any other operating system capable of running on computing device 200 and performing the operations described herein. Typical operating systems include, but are not limited to: WINDOWS 2000, WINDOWS Server 2012, WINDOWS CE, WINDOWS Phone, WINDOWS XP, WINDOWS VISTA, and WINDOWS 7, WINDOWS RT, WINDOWS 8 and WINDOW 10, all of which are manufactured by Microsoft Corporation of Redmond, Washington; MAC OS and iOS, manufactured by Apple, Inc.; and Linux, a freely-available operating system, e.g., Linux Mint distribution ("distro") or Ubuntu, distributed by Canonical Ltd. of London, United Kingdom; or Unix or other Unix-like derivative operating systems; and Android, designed by Google Inc., among others. Some operating systems, including, e.g., the CHROME OS by Google Inc., may be used on zero clients or thin clients, including, e.g., CHROMEBOOKS.

Computing device 200 may be any workstation, telephone, desktop computer, laptop or notebook computer, netbook, ULTRABOOK, tablet, server, handheld computer, mobile telephone, smartphone or other portable telecommunications devices, media playing device, a gaming system, mobile computing device, or any other type and/or form of computing, telecommunications or media device that is capable of communication. Computing device 200 may have sufficient processor power and memory capacity to perform the operations described herein. In some embodiments, computing device 200 may have different processors, operating systems, and input devices consistent with the device.

In some embodiments, computing device 200 is a gaming system. For example, computing device 200 may comprise a PLAYSTATION 3^{®}, or PERSONAL PLAYSTATION PORTABLE^{®} (PSP), PLAYSTATION VITA^{®}, PLAYSTATION 4^{®}, or a PLAYSTATION 4 PRO^{®} device manufactured by the Sony Corporation of Tokyo, Japan, or a NINTENDO DS, NINTENDO 3DS, NINTENDO WII, NINTENDO WII U, or a NINTENDO SWITCH device manufactured by Nintendo Co., Ltd., of Kyoto, Japan, or an XBOX 360^{®} device manufactured by Microsoft Corporation.

In some embodiments, computing device 200 is a digital audio player such as the Apple IPOD, IPOD Touch, and IPOD NANO lines of devices, manufactured by Apple Computer of Cupertino, California. Some digital audio players may have other functionality, including, e.g., a gaming system or any functionality made available by an application from a digital application distribution platform. For example, the IPOD Touch may access the Apple App Store. In some embodiments, computing device 200 is a portable media player or digital audio player supporting file formats including, but not limited to, MP3, WAV, M4A/AAC, WMA Protected AAC, AIFF, Audible audiobook, Apple Lossless audio file formats and .mov, .m4v, and .mp4 MPEG-4 (H.264/MPEG-4 AVC) video file formats.

In some embodiments, computing device 200 is a tablet e.g., the IPAD line of devices by Apple; GALAXY TAB family of devices by Samsung; or KINDLE FIRE^{™}, byAmazon.com, Inc. of Seattle, Washington. In other embodiments, computing device 200 is an eBook reader, e.g., the KINDLE family of devices by Amazon.com, or NOOK family of devices by Barnes & Noble, Inc. of New York City, New York.

In some embodiments, client device 102 includes a combination of devices, e.g., a smartphone combined with a digital audio player or portable media player. For example, one of these embodiments is a smartphone, e.g., the iPhone family of smartphones manufactured by Apple, Inc.; a Samsung GALAXY family of smartphones manufactured by Samsung, Inc; or a Motorola DROID family of smartphones. In yet another embodiment, client device 102 is a laptop or desktop computer equipped with a web browser and a microphone and speaker system, e.g., a telephony headset. In these embodiments, client device 102 is web-enabled and can receive and initiate audio calls. In some embodiments, a laptop or desktop computer is also equipped with a webcam or other video capture device that enables video chat and video call.

The following describes systems and methods for automatically provisioning a server. Provisioning a server may require setting up an operating system (OS) that meets one or more functionalities of the server. Provisioning the server may further include configuring the OS with one or more supporting tools and software programs. In some embodiments, provisioning the server may require creating one or more virtual machines (VMs) on the server.

The server may refer to various types of servers including, but not limited to, a cloud server running in a cloud computing environment, a virtual server, a dedicated server, and a bare-metal server. The cloud may be a public cloud, a private cloud, or a hybrid cloud. A server may be remotely provisioned using a client device via the one or more networks. Various Infrastructure as Code (IaC) techniques may be used for provisioning a server.

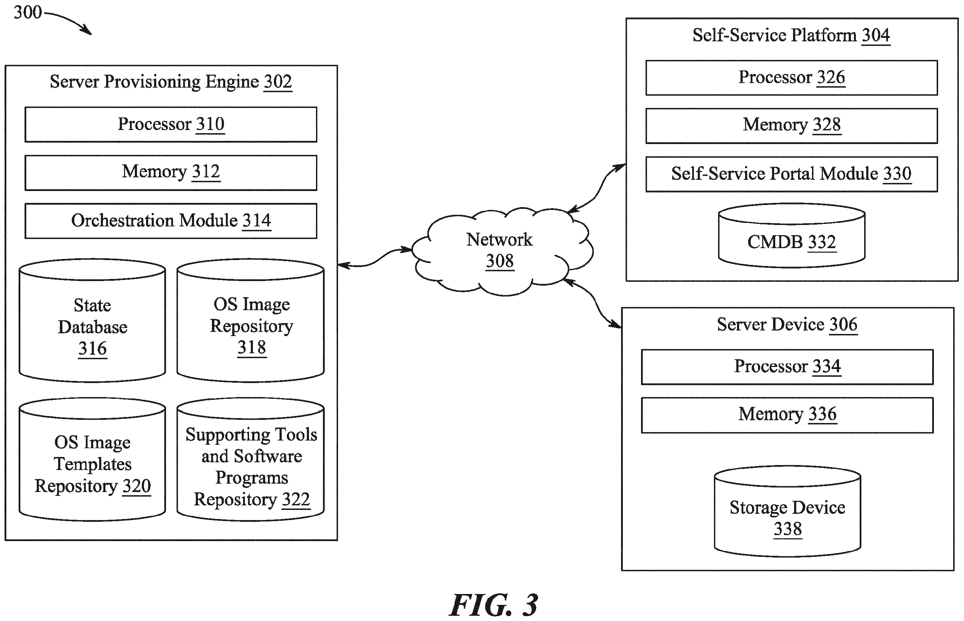

FIG. 3 depicts an implementation of some of an architecture of system 300 for provisioning a server device, according to some embodiments.

System 300 may include server provisioning engine 302, self-service platform 304, server device 306 and network 308 enabling communication between the system components. Network 308 may be an example or instance of the one or more networks, the details of which are provided with reference to FIG. 1 and its accompanying description.

In one embodiment, server provisioning engine 302 may correspond to server provisioning engine 106. Server provisioning engine 302 may provision server device 306. According to an embodiment, server provisioning engine 302 may provision server device 306 by setting up an operating system (OS) image and configuring the OS image with one or more supporting tools and software. Server provisioning engine 302 may deploy server device 306 using the configured OS. In some implementations, server provisioning engine 302 may create one or more virtual machines (VMs) in server device 306 and install the configured OS on the VMs. In some implementations, server provisioning engine 302 may share the configured OS image with a requestor via self-service platform 304. In some implementations, server provisioning engine 302 may provision one or more new server devices, upgrade one or more existing server devices, and migrate one or more server devices. In some implementations, server provisioning engine 302 may be owned or managed or otherwise associated with an organization or any entity authorized thereof. A system administrator may be a professional managing server provisioning engine 302. The system administrator may oversee and manage server provisioning engine 302 to ensure the server devices are provisioned in the most efficient manner. In an embodiment, the system administrator may be assigned login credentials to access server provisioning engine 302.

In an implementation, server provisioning engine 302 may operate in close coordination with self-service platform 304 and server device 306 such that server provisioning engine 302 receives a server provisioning request for provisioning server device 306 from the requestor via self-service platform 304. In an implementation, the requestor may access self-service platform 304 using a computing device, such as client 102, the details of which are provided with reference to FIG. 1 and FIG. 2, and their accompanying description.

In an implementation, the requestor may be one or more users, for example, information technology (IT) services personnel appointed by an organization or business to manage various activities associated with server device 306. In some implementations, the requestor may be an external client, a vendor, a contractor, and the like. In some embodiments, the requestor may correspond to a computer application installed on client device 102 and programmed to manage various activities associated with server device 306. In an embodiment, the computer application may be programmed to trigger a server provisioning request in response to one or more predetermined events.

Self-service platform 304 may be implemented in a variety of computing systems, such as a mainframe computer, a server, a network server, a laptop computer, a desktop computer, a notebook, a workstation, and any other computing system. In an implementation, self-service platform 304 may be communicatively coupled with server provisioning engine 302 through network 308 for exchanging information. In an implementation, self-service platform 304 may be implemented in a server, such as self-service server 104 shown in FIG. 1. In some implementations, self-service platform 304 may be an ITSM platform hosted on server devices or cloud computing platforms. Examples of ITSM platforms may include, but are not limited to, ServiceNow^{®} and Jira Service Desk^{™}. In some implementations, self-service platform 304 may be hosted on a web server. In some examples, the requestor may access self-service platform 304 via a web browser running on client devices 102. Self-service platform 304 may host programs and data required for providing a user interface on client devices 102 for the requestor to generate a server provisioning request for provisioning server device 306. In some embodiments, self-service platform 304 may be implemented as a part of a cluster of servers. In some embodiments, self-service platform 304 may be implemented across a plurality of servers, thereby tasks performed by self-service platform 304 may be performed by the plurality of servers. These tasks may be allocated among the cluster of servers by an application, a service, a daemon, a routine, or other executable logic for task allocation. In some implementations, self-service platform 304 may be implemented by a device, such as computing device 200 shown in FIG. 2. According to some embodiments, self-service platform 304 may include processor 326 and memory 328. For example, processor 326 and memory 328 of self-service platform 304 may be CPU 202 and main memory unit 204, respectively as shown in FIG. 2.

In operation, self-service platform 304 communicates with one or more client devices 102 via network 308. Client device 102 may establish a communication link with self-service platform 304 using communication protocols, such as Hypertext Transfer Protocol (HTTP) and Hypertext Transfer Protocol Secure (HTTPS). In an embodiment, the requestor may launch a web browser on client device 102 to establish communication with self-service platform 304 using a web link associated with self-service platform 304. In an embodiment, self-service platform 304 may prompt the requestor to enter login credentials to gain access to a user account on self-service platform 304. The requestor may enter login credentials via one or more I/O devices of client 102 to login and gain access to the user account on self-service platform 304.

Self-service platform 304 may include self-service portal module 330. Self-service portal module 330 may include various functionalities that may be associated with generating the server provisioning request for provisioning server device 306. In an implementation, self-service portal module 330 may be an application or a program that manages various aspects of generating a request for provisioning server device 306.

In operation, self-service portal module 330 may provide a user interface on a display device associated with client device 102 for the requestor to generate the server provisioning request for provisioning server device 306. Provisioning server device 306 may include one or more of generating and configuring an operating system (OS) image, deploying server device 306 using the configured OS image, upgrading server device 306, and migrating server device 306 to another server device. In an embodiment, the user interface may include one or more options to generate a server provisioning request, check a status of active server provisioning requests, escalate issues related to active requests, view request history, raise tickets, and reporting. In an implementation, the requestor may select the option, via one or more I/O devices of client 102, to generate a server provisioning request for provisioning server device 306. The server provisioning request may include one or more requirements associated with setting up a required OS image for server device 306 and one or more preferences for configuring the OS image.

In some implementations, self-service portal module 330 may provide a user interface on client device 102 to select the one or more requirements associated with setting up the required OS image for server device 306. The requestor may select the one or more requirements. In some embodiments, the one or more requirements for setting up the required OS image may include, but are not limited to, a type of operating system platform, network configuration, local user account(s) creation, group policies of the OS image, roles and features of the OS image, and OS image firewall. The operating system platform may be a known operating system platform such as Windows, Unix, Linux, Mac OSX, etc., or any other custom operating system platform. In some embodiments, the one or more requirements may include a type of server to be provisioned. The type of server to be provisioned may be a file server, a print server, an application server, a mail server, a web server, a database server, a virtual server, a cloud server, a proxy server, or any other type of server.

In some implementations, self-service portal module 330 may provide a user interface on client device 102 to select the one or more preferences for configuring the OS image. The requestor may select the one or more preferences. In some embodiments, the one or more preferences may include one or more preferred supporting tools and software programs for configuring the OS image. In some embodiments, supporting tools and software programs may correspond to various categories including, but not limited to, preferred patching tools, artificial intelligence software programs, machine learning software programs, server monitoring software programs, antivirus software programs, and server hardening standards. The requestor may select a preferred option corresponding to one or more categories of supporting tools and software programs. In an embodiment, self-service portal module 330 may provide a user interface with one or more options corresponding to each category of supporting tools and software programs. The requestor may select a preferred option for one or more categories of supporting tools and software programs. For example, for a given category of supporting tools and software programs, the requestor may select a preferred option by clicking on a radio button corresponding to the preferred option or selecting the preferred option from a drop-down list of one or more options. The requestor may make the selection using an I/O device, for example, a pointing device or a keyboard.

In an embodiment, in response to the selection of the one or more requirements associated with the OS image, self-service portal module 330 may recommend the one or more preferences for configuring the OS image, such as a suite of supporting tools and software programs that are compatible with the selected one or more requirements. The requestor may either select the entire suite or customize the selection of supporting tools and computer programs in the suite.

In some implementations, self-service portal module 330 may generate the server provisioning request for provisioning server device 306. The server provisioning request may include the one or more requirements selected by the requestor for setting up the required OS image and the one or more preferences selected by the requestor to configure the OS image. Self-service portal module 330 may send the server provisioning request to server provisioning engine 302. In an embodiment, self-service platform 304 may communicate with server provisioning engine 302 via the network 308 to transmit the server provisioning request. In some examples, self-service platform 304 may establish a communication link with server provisioning engine 302 using Secure Shell (SSH) protocol, SSH File Transfer Protocol (SFTP), Hypertext Transfer Protocol (HTTP), Hypertext Transfer Protocol Secure (HTTPS), Message Queuing Telemetry Transport (MQTT) Protocol, the module registry protocol, the provider registry protocol, Windows Management Instrumentation (WMI) Remote Protocol, and Application Programming Interface (API) such as Representational State Transfer (REST) API and Provisioning API.

In some implementations, self-service portal module 330 may provide a user interface to receive one or more requests for assigning IP address to one or more server devices or data centers.

Self-service platform 304 may further include a configuration management database (CMDB) 332. CMDB 332 may include configuration information associated with server device 306. Each time server device 306 is provisioned or any changes made in server device 306, associated configuration information is updated in CMDB 332. In some embodiments, server provisioning engine 302 compiles the configuration information associated with server device 306 and sends the configuration information to self-service platform 304 to be updated in CMDB 332.

Server provisioning engine 302 may be hosted on a cloud platform, for example, cloud platform 108 as shown in Fig. 1. The cloud platform hosting server provisioning engine 302 may be public cloud, private cloud, or hybrid cloud. According to some embodiments, server provisioning engine 302 may include processor 310, memory 312, orchestration module 314, state database 316, operating system (OS) image repository 318, OS image templates repository 320, and supporting tools and software programs repository 322. For example, processor 310 and memory 312 of server provisioning engine 302 may be CPU 202 and main memory unit 204, respectively as shown in FIG. 2.

In one or more implementations, orchestration module 314 may include a plurality of orchestration tools. An orchestration tool may refer to machine-readable definition files for managing and provisioning both physical servers and virtual machines (VMs). Examples of orchestrations tools may include, but are not limited to, Airflow ^{®}, Ansible ^{®}, Packer ^{®}, Puppet ^{®}, Terraform^{™}, Jenkins^{™} and TrueSight Server Automation ^{®} (TSSA). Orchestration module 314 is configured to perform one or more tasks associated with provisioning server device 306. The one or more tasks may include, but are not limited to, querying state database 316 to search for the OS image that meets the one or more requirements, retrieving the OS image from OS image repository 318, generating the OS image in accordance with the one or more requirements, configuring the OS image with the one or more preferences, deploying server device 306 using the configured OS image, and creating virtual machines (VMs) in server device 306. In some implementations, one or more of the plurality of orchestration tools may be assigned dedicated tasks associated with provisioning server device 306.

In some embodiments, state database 316 may store a taxonomy defining roles of server devices provisioned by server provisioning engine 302. In some embodiments, state database 316 may store a taxonomy defining features of OS images stored in OS image repository 318. In some embodiments, corresponding to each entry in state database 316, the taxonomy may define one or more of, type of operating system image and type of server provisioned. OS image repository 318 may include one or more pre-defined OS images and a plurality of OS images generated by server provisioning engine 302 in response to server provisioning requests received in the past. In some embodiments, each time a server provisioning request is received, server provisioning engine 302 may store the OS image generated in response to the server provisioning request in OS image repository 318 and update state database 316 to include a new entry corresponding to that server provisioning request.

In some implementations, OS image templates repository 320 may include a plurality of OS image templates corresponding to various types of servers, operating system platforms, and various other requirements associated with creating an OS image. In some embodiments, OS image templates repository 320 may include off-the-shelf server template images for common operating systems used in various types of servers. In some embodiments, OS image templates repository 320 may include libraries of templates built by vendors and third parties for particular roles, such as for application servers, web servers, database servers, and various other types of servers. In some embodiments, OS image templates repository 320 may include OS image templates build by the service provider associated with server provisioning engine 302. The OS image templates may be stored in various formats including, but not limited to, Open Virtualization Format (OVF) for provisioning virtual machines (VMs) and OS installation disk image, for example, ISO image. In some embodiments, OS image templates repository 320 may include playbooks to record and execute various server provisioning functions. The playbooks may describe a policy to be enforced in provisioning of server devices, or a set of steps in a general information technology (IT) process. The playbooks may be used to manage configurations of and deployments to server devices. In an embodiment, the playbooks may sequence roll updates for server devices, and may delegate actions.

In some embodiments, OS image templates repository 320 may store pre-configured OS image templates. For example, OS image templates may be pre-configured with a server hardening standard, such as Center for Internet Security (CIS) server hardening.

In some embodiments, server provisioning engine 302 may include a bucket (not shown). The bucket may refer to basic containers that hold data stored in cloud storage. The bucket may be linked to IP Address Management (IPAM) service of a service provider providing the server provisioning service via server provisioning engine 302. The IPAM service manages and stores IP addresses allocated to various server devices and datacenters. The bucket may provide information regarding the allocated IP addresses to state database 316. State database 316 may use this information to allocate IP addresses to server devices provisioned by server provisioning engine 302.

In some implementations, server provisioning engine 302 may receive the server provisioning request from self-service platform 304. When the server provisioning request is received, orchestration module 314 accesses state database 316 to search for an OS image that meets the one or more requirements for setting up the required OS image. Orchestration module 314 queries state database 316 to search for an OS image that meets the one or more requirements included in the server provisioning request for setting up the required OS image. In some embodiments, state database 316 may return at least one search result that meets the one or more requirements included in the server provisioning request. Orchestration module 314 may retrieve the OS image corresponding to the search result from OS image repository 318. In some embodiments, the OS image retrieved from OS image repository 318 may be used as the required OS image for provisioning server device 306. In some embodiments, orchestration module 314 may maintain a vanilla server build process as well as existing servers in production for updating packages, TSS, rebuilds, migration, etc.

In some embodiments, in the absence of any OS image that meets the one or more requirements for setting up the required OS image, state database 316 may not return any search result. In such scenario, orchestration module 314 may generate a new OS image in accordance with the one or more requirements included in the server provisioning request.

In some implementations, orchestration module 314 generates the new OS image using OS image templates stored in OS image templates repository 320. Orchestration module 314 may identify and retrieve an OS image template from OS image templates repository 320 in accordance with the one or more requirements included in the server provisioning request. Orchestration module 314 may use the retrieved OS image template to generate the new OS image in accordance with the one or more requirements included in the server provisioning request. In some embodiments, the new OS image generated in accordance with the one or more requirements may be used as the required OS image for provisioning server device 306.

In some implementations, supporting tools and software programs repository 322 may include one or more software programs for each category of supporting tools and software programs. For example, supporting tools and software programs repository 322 may include one or more software programs for patch management, artificial intelligence, machine learning, server monitoring, antivirus, and standards for server hardening. In an embodiment, supporting tools and software programs repository 322 may include binaries for one or more of patch management software programs, artificial intelligence software programs, machine learning software programs, server monitoring software programs, and antivirus software programs. Some examples of patch management software programs include SolarWinds Patch Manager^{®}, Atera Patch Management^{®} and NinjaRMM Patch Management^{®}. Some examples of artificial intelligence software programs include IBM Watson^{™}, Cloud Machine Learning Engine^{™}, Salesforce Einstein^{™} and Azure Machine Learning Studio^{™}. Some examples of machine learning software programs include TensorFlow^{®}, Shogun^{™}, Apache Spark MLlib^{™} and RapidMiner^{™}. Some examples of server monitoring software programs include Datadog^{™}, SolarWinds Server^{®} and Application Monitor^{®,} Paessler PRTG^{®,} OpenNMS and Nagios XI^{®}. Some examples of antivirus software programs include Norton Antivirus^{®}, Kaspersky Anti-Virus^{®}, McAfee^{®} and Bitdefender^{®} Antivirus.

In some implementations, orchestration module 314 may configure the OS image with the one or more preferences included in the server provisioning request. The one or more preferences may include a preferred option, selected by the requestor, corresponding to one or more categories of supporting tools and software programs. For example, the one or more preferences may include one or more of: a preferred patch management software program selected from one or more patch management software programs, a preferred artificial intelligence software program selected from one or more artificial intelligence software programs, a preferred machine learning software program selected from one or more machine learning software programs, a preferred server monitoring software program selected from one or more server monitoring software programs, a preferred antivirus software program selected from one or more antivirus software programs, and a preferred server hardening standard selected from one or more server hardening standards. Orchestration module 314 may configure the OS image with the preferred supporting tools and software programs specified in the one or more preferences. In some embodiments, from OS image templates repository 320, orchestration module 314 may identify a pre-configured OS image, which meets both, a) the one or more requirements for setting up the required OS image, and b) one or more preferences for configuring the required OS image.

In some implementations, orchestration module 314 may share the configured OS image with the requestor. In some embodiments, orchestration module 314 may share the configured OS image to self-service platform 304 via network 308. Using client device 102, the requestor may access or download the configured OS image from self-service platform 304. In some embodiments, orchestration module 314 may directly share the configured OS image with the requestor over network 308 using various communication channels including, but not limited to, an email and a file sharing platform.

In some implementations, orchestration module 314 may provision server device 306. In some embodiments, provisioning server device 306 may include deploying server device 306 using the configured OS image. In some embodiments, provisioning server device 306 may include deploying a hypervisor on server device 306 to create and run one or more virtual machines (VMs) on server device 306. The configured OS image may be used by the one or more VMs created by the hypervisor. Examples of the hypervisors may include VMware ESX/ESXi, Xen hypervisor, HYPER-V hypervisors, or others. In some implementations, provisioning server device 306 may include deploying one or more containers on server device 306. Each of the one or more containers may share the OS kernel of the configured OS image and provide isolated environment for running applications. The one or more containers may be deployed using, for example, Docker^{®}, Kubernetes^{®}, MicroK8s^{®}, AWS^{®}, and Google Cloud Platform^{®}.

According to some embodiments, server device 306 may include processor 334, memory 336, and storage device 338. For example, processor 334, memory 336, and storage device 338 of server device 306 may be CPU 202, main memory unit 204, and storage device 212, respectively as shown in FIG. 2. In an embodiment, server device 306 may be an on-premise server device hosted in a secured private network associated with an organization or owner of the on-premise server device. Server provisioning engine 302 may connect with the secured private network using one or more authentication techniques. Server provisioning engine 302 may provision the on-premise server device in the secured private network. In an embodiment, server provisioning engine 302 may run an instance of one or more orchestration tools in the secured private network to provision the on-premise server device.

In some implementations, orchestration module 314 may store the new OS image generated in response to the server provisioning request in OS image repository 318 and update state database 316 to include a taxonomy defining the roles of provisioned server device 306 and type of the new OS image. In some embodiments, orchestration module 314 may store the configured OS image in OS image repository 318.

In some implementations, the server provisioning request may correspond to upgrading server device 306 by one or more of: hardening existing OS image of server device 306 with new security standards, installing additional supporting tools and software programs, and updating already installed software programs in server device 306.

In one or more implementations, server provisioning engine 302 may generate documentation associated with provisioning of server device 306. In some embodiments, the documentation may include one or more of: work instructions associated with configuring server device 306, High Level Design (HLD), Built Installation Guides (BIG), Technical Security Standards (TSS), patching blueprint, monitoring blueprint, escalation matrix, and training material associated with the provisioning of server device 306. In some embodiments, the documentation may include help files to support the requestor, and troubleshooting instructions related to supporting tools and software programs for the requestor to properly configure the OS image. In some embodiments, the documentation may include contact details for customer support. In some embodiments, the documentation may be provided with SharePoint^{™} site for Cloud, GDTS, NDCS, AHS for work instructions as well support and escalation matrix.

In some implementations, server provisioning engine 302 may share the documentation with the requestor. In some embodiments, server provisioning engine 302 may send the documentation to self-service platform 304 via network 308. Using client device 102, the requestor may access or download the documentation from self-service platform 304. In some embodiments, server provisioning engine 302 may directly share the documentation with the requestor over network 308 using various communication channels including, but not limited to, email and file-sharing link.

In some implementations, server provisioning engine 302 may gather all events associated with the provisioning of server device 306, such as receiving the server provisioning request, searching or generating the OS image that meets the one or more requirements, configuring the OS image with the one or more preferences (such as preferred supporting tools and software programs), sharing the configured OS image with the requestor, deploying server device 306, allocating IP address, and various other tasks associated with the provisioning of server device 306. Server provisioning engine 302 may also gather status (e.g., if a given task was completed without any error) of all the events associated with the provisioning of server device 306.

In some embodiments, server provisioning engine 302 may continuously integrate all the gathered events in a work file and send the work file to the requestor. The work file may be accessed or downloaded by the requestor via self-service platform 304 or may be communicated to the requestor via email or file share link. In some embodiments, server provisioning engine 302 may compile the documentation and all the gathered events to generate a summary of events associated with the server provisioning request. In an embodiment, server provisioning engine 302 may send the summary to the requestor via email, file sharing link or any other communication channel. In an embodiment, server provisioning engine 302 may send the summary to self-service platform 304 via network 308 and the requestor may access or download the summary from self-service platform 304.

In some embodiments, server provisioning engine 302 may use the gathered events to generate configuration items (CI). Server provisioning engine 302 may send the CI to self-service platform 304. Self-service platform 304 may use the received CI to update CMDB 332 to ensure better inventory management of IT assets and IT service management.

In some implementations, orchestration module 314 may assign tasks associated with the server provisioning request amongst the plurality of orchestration tools. In one example, a first orchestration tool may be assigned a task to query state database 316 to search for an OS image that meets the one or more requirements, and if found, retrieve the OS image from OS image repository 318. Further, a second orchestration tool may be assigned the task to generate an OS image in accordance with the one or more requirements and a third orchestration tool may be assigned the task to configure the OS image. Furthermore, another orchestration tool may be assigned the task to deploy server device 306 or create VMs in server device 306. Each of the plurality of orchestration tools may be assigned one or more tasks associated with the server provisioning request. In some embodiment, the one or more tasks may be assigned to an orchestration tool based on one or more capabilities of the orchestration tools. In some embodiments, the system administrator may configure server provisioning engine 302 to define one or more tasks, associated with server provisioning, for each of the plurality of orchestration tools. In some embodiment, the system administrator may include one or more new orchestration tools and remove one or more existing orchestration tools from orchestration module 314. Server provisioning engine 302 may create required scripts for the new orchestration tools. The one or more new orchestration tools may then take up the tasks assigned to the one or more orchestration tools that were removed from orchestration module 314. Thus, server provisioning engine 302 provides a modular framework for provisioning server devices. Such a model for server provisioning does not depend on a specific set of one or more orchestration tools. Such a modular framework enables server provisioning engine 302 to harness, in the most efficient manner, capabilities of orchestration tools that are best suited to the service provider in terms of cost (e.g., licensing cost of various orchestration tools), and overall time required for provisioning the server devices. As described above, server provisioning engine 302 may use multiple orchestration tools for provisioning server devices, resulting in a significant reduction in time for provisioning server devices. In some implementations, orchestration module 314 provides a modular approach to trigger multiple instances of one or more orchestration tools to respond to a server provisioning request that may otherwise require a significant time to complete. For example, if a server provisioning request for provisioning a large number of (e.g., 100-5000) virtual machines (VMs) in server device 306 is received, orchestration module 314 may trigger multiple instances (e.g., 10-500 instances) of one or more orchestration tools. The multiple instances of the one or more orchestration tools may simultaneously run in a temporary containerized environment to complete the server provisioning request for provisioning a large number of VMs. Once the task is completed, the multiple instances of the one or more orchestration tools may be removed or decommissioned by orchestration module 314. Such a modular approach of triggering multiple instances of orchestration tools may significantly reduce the amount of time required to provision a server device. With multiple instances of the one or more orchestration tools, server provisioning engine 302 may be configured to scale up to provide services on-demand and scale down services when not in use to optimize cost and resources. Also, with multiple instances of the one or more orchestration tools VMs can be provisioned and deployed quickly with ease.

The modular framework provided by server provisioning engine 302 provides flexibility in changing orchestration tools such that in instances where a cost (e.g., licensing cost) associated with any orchestration tool increases, that orchestration tool may be replaced with a more cost-effective orchestration tool provided by the same vendor or other vendors. Furthermore, the modular framework enables to scale on-demand and fast during high demand such as when multiple server provisioning requests are received. The modular framework of server provisioning engine 302 enables delegating work amongst the plurality of orchestration tools and even triggers multiple instances of the orchestration tools to significantly reduce time for server provisioning requests which may otherwise require a long time for provisioning. The modular framework of server provisioning engine 302 provides a highly agile and DevOps based solution for server provisioning.

Furthermore, having state database 316 facilitates in quickly determining if a required OS image already exists in OS image repository 318, and if available, the time required for generating an OS image is significantly saved. Moreover, OS image templates repository 320 providing off-the-shelf server template images significantly reduces the time required to generate new OS images.

In some implementations, OS image templates repository 320 may store script packages that have been already developed, for example, by the service provider. These already developed script packages may be reused during server provisioning to save significant cost and time associated with creating and configuring the OS images.

In some implementations, server provisioning engine 302 may be hosted in a cloud platform provided by a cloud computing service provider, for example, Google Cloud Platform (GCP). In some embodiments, server provisioning engine 302 runs in a containerized environment, thus making it fast and reliable to shift server provisioning engine 302 from one cloud platform to another. In some implementations, server provisioning engine 302 may be hosted on virtual or physical server devices.

In some implementations, functionalities of self-service platform 304 may be integrated within or provided by server provisioning engine 302. In such implementations, the requestor may communicate with server provisioning engine 302 using client device 102 to generate a server provisioning request. Server provisioning engine 302 may provide a user interface for the requestor to select the one or more requirements associated with setting up a required OS image and select the one or more preferences for configuring the OS image.

Although the implementations and embodiments explained with reference to and shown in Fig. 3 depict only one server device 306, the methods and systems disclosed in the present application are applicable for provisioning a plurality of server devices hosted across various server platforms, such as on-premise servers, cloud servers, bare-metal servers, and virtualization servers. In some implementations, server provisioning engine 302 may individually or simultaneously provision server devices hosted on one or more cloud platforms in response to one or more server provisioning requests received for provisioning the server devices hosted on the one or more cloud platforms.

In some implementations, server provisioning engine 302 may simultaneously receive multiple server provisioning requests for provisioning multiple server devices. In such implementations, server provisioning engine may simultaneously perform tasks to provision all the server devices corresponding to the server provisioning requests. In an embodiment, server provisioning engine 302 may trigger multiple instances of orchestration tools to simultaneously provision the multiple server devices.

In some implementations, a user or an organization may subscribe to services provided by server provisioning engine 302, to provide automatic provisioning of server devices owned, managed, or used by the user or the organization.

In some implementations, server provisioning engine 302 may provide information regarding the supporting tools and software programs offered by server provisioning engine 302 to self-service platform 304. Self-service platform 304 may modify the user interface to include the supporting tools and software programs offered by server provisioning engine 302. In some embodiments, server provisioning engine 302 may also communicate addition and/or removal of supporting tools and software programs to self-service platform 304 and self-service platform 304 may accordingly modify the user interface for selecting one or more preferences to configure an OS image. Similarly, server provisioning engine 302 may also provide information regarding types of servers and operating systems that are supported by server provisioning engine 302 for self-service platform 304 to modify the user interface for a requestor to select one or more requirements for setting up a required server OS image. Further, server provisioning engine 302 may notify any addition and/or removal of supported OS platforms and types of servers for self-service platform 304 to accordingly modify the user interface for selection of one or more requirements for configuring a server OS image.

In some implementations, server provisioning engine 302 is configured to provide a single platform to support different vendors, technologies, tools and configurations. Server provisioning engine 302 may provide one solution for different teams such as Tooling, Hosting, Application, Workplace, Network and datacenter, Global IT and Cloud towers. Being able to provide the single platform, server provisioning engine 302 may provide single solution for all global teams including Tooling, Cloud, Hosting, Application, Workplace, Network and datacenter and Global IT. Also, server provisioning engine 302 may manage greenfield and existing deployments. In some embodiments, server provisioning engine 302 may be implemented on platforms such as GCP for efficiency and cost effectiveness and also to increase or decrease capacity based on demand.

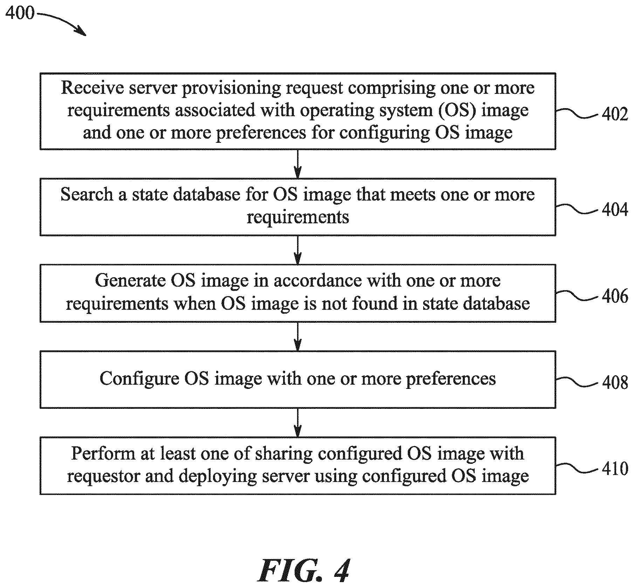

FIG. 4 depicts a flowchart of method 400 for provisioning a server, according to some embodiments.

At step 402, method 400 includes receiving a server provisioning request. The server provisioning request may comprise one or more requirements associated with operating system (OS) image and one or more preferences for configuring the OS image. In an implementation, orchestration module 314 of server provisioning engine 302 receives the server provisioning request from self-service platform 304. In an embodiment, self-service portal module 330 may provide a user interface on a computing device (for example, client device 102) for a requestor to select the one or more requirements and the one or more preferences.

At step 404, method 400 includes searching a state database for the OS image that meets the one or more requirements. In an embodiment, the one or more requirements may include, but are not limited to, a type of operating system and a type of server to be provisioned. In an implementation, orchestration module 314 may search state database 316 for the OS image that meets the one or more requirements.

At step 406, method 400 includes generating the OS image in accordance with the one or more requirements when the OS image is not found in the state database. In an implementation, orchestration module 314 may generate the OS image in accordance with the one or more requirements. In an embodiment, orchestration module 314 may generate the OS image using one or more OS image templates stored in OS image templates repository 320.

At step 408, method 400 includes configuring the OS image with the one or more preferences included in the server provisioning request. In an implementation, orchestration module 314 may configure the OS image with the one or more preferences. In an embodiment, the one or more preferences may include one or more preferred supporting tools and software programs for configuring the OS image.

At step 410, method 400 includes performing at least one of: sharing the configured OS image with the requestor and deploying the server using the configured OS image. In an implementation, orchestration module 314 may send the configured OS image to self-service platform 304 and the requestor may access or download the configured OS image from self-service platform 304. In an implementation, orchestration module 314 may share the configured OS image directly with the requestor using various communication methods such as an email and/or file sharing platform. In an implementation, orchestration module 314 may deploy the server using the configured OS image. In an embodiment, orchestration module 314 may deploy the server by deploying a hypervisor on the server to create and run one or more virtual machines (VMs) on the server. The configured OS image may be used by the one or more VMs. In an embodiment, orchestration module 314 may deploy the server by deploying one or more containers on the server.

Various embodiments of the methods and systems have been described for server provisioning. Various implementations and embodiments described in the present disclosure enables various activities associated with server provisioning to be carried out in the most efficient manner. With the self-service portal, a requestor may easily select requirements associated with OS image and preferences for configuring the OS image. With state database 316 and OS image repository 318, an already existing OS image meeting the requirements may be searched and readily available for provisioning a server device, thus saving a significant amount of time required to generate a new OS image in accordance with the requirements. Further, with OS image templates repository 320 providing off-the-shelf server template images and libraries of templates built for particular roles and in different formats, the time required for generating a new OS image meeting the requirements may be significantly saved. Furthermore, with supporting tools and software programs repository 322 providing a suite of supporting tools and software programs, the OS image may be quickly and easily configured with the preferred tools and software programs. Moreover, the systems and methods of server provisioning described in the present disclosure provides a modular framework for provisioning server devices. The modular framework enables a) one or more orchestration tools to be added to and/or removed from server provisioning engine 302, b) divide various activities associated with server provisioning amongst a plurality of orchestration tools, and c) trigger multiple instances of one or more orchestration tools to respond to provisioning requests requiring significant time and resources to process. As a result of such a modular framework for server provisioning, capabilities of orchestration tools may be harnessed in the most efficient manner, new orchestration tools that are best suited to the service provider in terms of cost (e.g., licensing cost of various orchestration tools) may be included, any existing orchestration tool with increased cost (e.g., licensing cost) may be removed, and overall time required for provisioning server devices may be significantly reduced. The systems and methods of server provisioning described in the present disclosure provides a unified solution for various activities associated with server provisioning, such as generating an OS image, configuring the OS image with supporting tools and software programs, deploying the server device, assigning IP address, generating documentation associated with server provisioning, and updating the configuration items in configuration management database. The unified solution provided by the systems and methods described in the present disclosure saves significant time and, in many cases, saves time associated with several server provisioning activities which may otherwise be scheduled for over next few days of receiving server provisioning request.

While various embodiments of the methods and systems have been described, these embodiments are illustrative and in no way limit the scope of the described methods or systems. Those having skill in the relevant art can effect changes to form and details of the described methods and systems without departing from the broadest scope of the described methods and systems. Thus, the scope of the methods and systems described herein should not be limited by any of the illustrative embodiments and should be defined in accordance with the accompanying claims.

## Claims

1. A method (400) for automatically provisioning a server (110, 306), the method **characterized by**:
receiving (402), by a server provisioning engine (106, 302), a server provisioning request from a requestor via a self-service portal (330), wherein the server provisioning request comprises one or more requirements associated with an operating system (OS) image and one or more preferences for configuring the OS image;
searching (404), by the server provisioning engine (106, 302), for the OS image that meets the one or more requirements in an OS image repository (318) by querying a state database (316);
generating (406), by the server provisioning engine (106, 302), the OS image in accordance with the one or more requirements when the OS image is not found in the OS image repository (318);
configuring (408), by the server provisioning engine (106, 302), the OS image with the one or more preferences; and
performing (410), by the server provisioning engine (106, 302), at least one of: sharing the configured OS image with the requestor and deploying the server (110, 306) using the configured OS image.

2. The method (400) as claimed in any one of the preceding claims, further **characterised by** updating, by the server provisioning engine (106, 302), configuration items (CI) associated with provisioning the server (110, 306) in a Configuration Management Database (CMDB) (332).

3. The method (400) as claimed in any one of the preceding claims, further **characterised by**:
generating, by the server provisioning engine (106, 302), a documentation associated with provisioning the server (110, 306), wherein the documentation comprises one or more of: work instructions associated with configuring the server (110, 306), High Level Design (HLD), Built Installation Guides (BIG), Technical Security Standards (TSS), escalation matrix, and training material associated with provisioning the server (110, 306); and
sharing, by the server provisioning engine (106, 302), the documentation with the requestor via the self-service portal (330).

4. The method (400) as claimed in any one of the preceding claims, further **characterised by** generating, by the server provisioning engine (106, 302), multiple instances of one or more orchestration tools for provisioning the server (110, 306).

5. The method (400) as claimed in any one of the preceding claims, further **characterised by** assigning, by the server provisioning engine (106, 302), a dedicated task associated with provisioning the server (110, 306) to each of one or more orchestration tools.

6. The method (400) as claimed in any one of the preceding claims, wherein the one or more preferences comprises selection of a preferred patch management software program from one or more patch management software programs, a preferred artificial intelligence software program from one or more artificial intelligence software programs, a preferred machine learning software program from one or more machine learning software programs, a preferred server monitoring software program from one or more server monitoring software programs, a preferred antivirus software program from one or more antivirus software programs, and a preferred server hardening standard from one or more server hardening standards.

7. The method as claimed in any one of the preceding claims, wherein deploying the server (110, 306) comprises deploying a hypervisor on the server (110, 306) to create and run one or more virtual machines (VMs) on the server (110, 306), and wherein the configured OS image is used by the one or more VMs.

8. A system (300) for automatically provisioning a server (110, 306), the system **characterised by**:
a server provisioning engine (106, 302) configured to:
receive a server provisioning request from a requestor via a self-service portal (330), wherein the server provisioning request comprises one or more requirements associated with an operating system (OS) image and one or more preferences for configuring the OS image;
query a state database (316) to search for the OS image that meets the one or more requirements in an OS image repository (318);
generate the OS image in accordance with the one or more requirements when the OS image is not found in the OS image repository (318);
configure the OS image with the one or more preferences; and
perform at least one of: share the configured OS image with the requestor and deploy the server (110, 306) using the configured OS image.

9. The system (300) as claimed in any one of the preceding claims, wherein the server provisioning engine (106, 302) comprises:
the OS image repository (318) storing OS images; and
one or more repositories (320, 322) storing at least one of OS image templates, supporting tools and software programs, and playbooks, wherein the server provisioning engine (106, 302) generates the OS image and configures the OS image based on the at least one of the OS image templates, the supporting tools and software programs, and the playbooks.

10. The system (300) as claimed in any one of the preceding claims, wherein the self-service portal (330) comprises a user interface for the requestor to select the one or more requirements and the one or more preferences.

11. The system (300) as claimed in any one of the preceding claims, wherein the server provisioning engine (106, 302) is further configured to update configuration items (CI) associated with provisioning the server (110, 306) in a Configuration Management Database (CMDB) (332).

12. The system (300) as claimed in any one of the preceding claims, wherein the server provisioning engine (106, 302) is further configured to:
generate a documentation associated with provisioning the server (110, 306), wherein the documentation comprises one or more of: work instructions associated with configuring the server (110, 306), High Level Design (HLD), Built Installation Guides (BIG), Technical Security Standards (TSS), escalation matrix, and training material associated with provisioning the server (110, 306); and
share the documentation with the requestor via the self-service portal (330).

13. The system (300) as claimed in any one of the preceding claims, wherein the server provisioning engine (106, 302) comprises a plurality of orchestration tools, wherein each of the plurality of orchestration tools is assigned a dedicated task associated with provisioning the server (110, 306).

14. The system (300) as claimed in any one of the preceding claims, wherein the server provisioning engine (106, 302) is further configured to generate multiple instances of one or more orchestration tools of the plurality of orchestration tools.

15. The system (300) as claimed in any one of the preceding claims, wherein the one or more preferences comprises selection of a preferred patch management software program from one or more patching management software programs, a preferred artificial intelligence software program from one or more artificial intelligence software programs, a preferred machine learning software program from one or more machine learning software programs, a preferred server monitoring software program from one or more server monitoring software programs, a preferred antivirus software program from one or more antivirus software programs, and a preferred server hardening standard from one or more server hardening standards.

## Patentansprüche

1. Verfahren (400) zum automatischen Bereitstellen eines Servers (110, 306), wobei das Verfahren **gekennzeichnet ist durch:**
Empfangen (402), **durch** eine Serverbereitstellungsmaschine (106, 302), einer Serverbereitstellungsanforderung von einem Anforderer über ein Selbstbedienungsportal (330), wobei die Serverbereitstellungsanforderung eine oder mehrere Voraussetzungen, die einem Betriebssystem-Bild (OS-Bild) zugeordnet sind, und eine oder mehrere Präferenzen zum Konfigurieren des OS-Bildes umfasst;
Suchen (404), **durch** die Serverbereitstellungsmaschine (106, 302), nach dem OS-Bild, das die eine oder die mehreren Voraussetzungen erfüllt, in einem OS-Bildrepository (318) **durch** Abfragen einer Zustandsdatenbank (316);
Erzeugen (406), **durch** die Serverbereitstellungsmaschine (106, 302), des OS-Bildes gemäß der einen oder den mehreren Voraussetzungen, wenn das OS-Bild in dem OS-Bildrepository (318) nicht gefunden wird;
Konfigurieren (408), **durch** die Serverbereitstellungsmaschine (106, 302), des OS-Bildes mit der einen oder den mehreren Präferenzen; und
Durchführen (410), **durch** die Serverbereitstellungsmaschine (106, 302), von mindestens einem von: Teilen des konfigurierten OS-Bildes mit dem Anforderer und Einsetzen des Servers (110, 306) unter Verwendung des konfigurierten OS-Bildes.

2. Verfahren (400) nach einem der vorstehenden Ansprüche, ferner **gekennzeichnet durch** ein Aktualisieren, durch die Serverbereitstellungsmaschine (106, 302), von Konfigurationselementen (CI), die dem Bereitstellen des Servers (110, 306) zugeordnet sind, in einer Konfigurationsverwaltungsdatenbank (CMDB) (332).

3. Verfahren (400) nach einem der vorstehenden Ansprüche, ferner **gekennzeichnet durch:**
das Erzeugen, durch die Serverbereitstellungsmaschine (106, 302), einer Dokumentation, die dem Bereitstellen des Servers (110, 306) zugeordnet ist, wobei die Dokumentation eines oder mehrere umfasst von: Arbeitsanweisungen, die dem Konfigurieren des Servers (110, 306) zugeordnet sind, High Level Design (HLD), Handbüchern (BIG) für zusammengesetzte Anlagen, technischen Sicherheitsstandards (TSS), einer Eskalationsmatrix und Trainingsmaterial, das dem Bereitstellen des Servers (110, 306) zugeordnet ist; und
Teilen, durch die Serverbereitstellungsmaschine (106, 302), der Dokumentation mit dem Anforderer über das Selbstbedienungsportal (330).

4. Verfahren (400) nach einem der vorstehenden Ansprüche, ferner **gekennzeichnet durch** das Erzeugen, durch die Serverbereitstellungsmaschine (106, 302), mehrerer Instanzen eines oder mehrerer Orchestrierungswerkzeuge zum Bereitstellen des Servers (110, 306).

5. Verfahren (400) nach einem der vorstehenden Ansprüche, ferner **gekennzeichnet durch** ein Zuweisen, durch die Serverbereitstellungsmaschine (106, 302), einer dedizierten Aufgabe, die dem Bereitstellen des Servers (110, 306) zugeordnet ist, zu jedem von einem oder mehreren Orchestrierungswerkzeugen.

6. Verfahren (400) nach einem der vorstehenden Ansprüche, wobei die eine oder die mehreren Präferenzen ein Auswählen eines präferierten Patch-Verwaltungssoftwareprogramms aus einem oder mehreren Patch-Verwaltungssoftwareprogrammen, eines präferierten Softwareprogramms für künstliche Intelligenz aus einem oder mehreren Softwareprogrammen für künstliche Intelligenz, eines präferierten Maschinenlernsoftwareprogramms aus einem oder mehreren Maschinenlernsoftwareprogrammen, eines präferierten Serverüberwachungssoftwareprogramms aus einem oder mehreren Serverüberwachungssoftwareprogrammen, eines präferierten Antivirensoftwareprogramms aus einem oder mehreren Antivirensoftwareprogrammen und eines präferierten Serverhärtungsstandards aus einem oder mehreren Serverhärtungsstandards umfassen.

7. Verfahren nach einem der vorstehenden Ansprüche, wobei das Einsetzen des Servers (110, 306) das Einsetzen eines Hypervisors auf dem Server (110, 306) umfasst, um eine oder mehrere virtuelle Maschinen (VMs) auf dem Server (110, 306) zu erstellen und auszuführen, und wobei das konfigurierte OS-Bild durch die eine oder die mehreren VMs verwendet wird.

8. System (300) zum automatischen Bereitstellen eines Servers (110, 306), wobei das System **gekennzeichnet ist durch:**
eine Serverbereitstellungsmaschine (106, 302), die konfiguriert ist zum:
Empfangen einer Serverbereitstellungsanforderung von einem Anforderer über ein Selbstbedienungsportal (330), wobei die Serverbereitstellungsanforderung eine oder mehrere Voraussetzungen, die einem Betriebssystem-Bild (OS-Bild) zugeordnet sind, und eine oder mehrere Präferenzen zum Konfigurieren des OS-Bildes umfasst;
Abfragen einer Zustandsdatenbank (316), um nach dem OS-Bild, das die eine oder die mehreren Voraussetzungen erfüllt, in einem OS-Bildrepository (318) zu suchen;
Erzeugen des OS-Bildes gemäß der einen oder den mehreren Voraussetzungen, wenn das OS-Bild in dem OS-Bildrepository (318) nicht gefunden wird;
Konfigurieren des OS-Bildes mit der einen oder den mehreren Präferenzen; und
Durchführen mindestens eines von: Teilen des konfigurierten OS-Bildes mit dem Anforderer und Einsetzen des Servers (110, 306) unter Verwendung des konfigurierten OS-Bildes.

9. System (300) nach einem der vorstehenden Ansprüche, wobei die Serverbereitstellungsmaschine (106, 302) umfasst:
das OS-Bildrepository (318), das OS-Bilder speichert; und
ein oder mehrere Repositorys (320, 322), die mindestens eines von OS-Bildvorlagen, unterstützenden Werkzeugen und Softwareprogrammen, und Playbooks speichern, wobei die Serverbereitstellungsmaschine (106, 302) das OS-Bild erzeugt und das OS-Bild basierend auf dem mindestens einen der OS-Bildvorlagen, der unterstützenden Werkzeuge und Softwareprogramme, und der Playbooks konfiguriert.

10. System (300) nach einem der vorstehenden Ansprüche, wobei das Selbstbedienungsportal (330) eine Benutzerschnittstelle für den Anforderer umfasst, um die eine oder die mehreren Voraussetzungen und die eine oder die mehreren Präferenzen auszuwählen.

11. System (300) nach einem der vorstehenden Ansprüche, wobei die Serverbereitstellungsmaschine (106, 302) ferner konfiguriert ist, um Konfigurationselemente (CI), die dem Bereitstellen des Servers (110, 306) zugeordnet sind, in einer Konfigurationsverwaltungsdatenbank (CMDB) (332) zu aktualisieren.

12. System (300) nach einem der vorstehenden Ansprüche, wobei die Serverbereitstellungsmaschine (106, 302) ferner konfiguriert ist zum:
Erzeugen einer Dokumentation, die dem Bereitstellen des Servers (110, 306) zugeordnet ist, wobei die Dokumentation eines oder mehrere umfasst von: Arbeitsanweisungen, die dem Konfigurieren des Servers (110, 306) zugeordnet sind, High Level Design (HLD), Handbüchern (BIG) für zusammengesetzte Anlagen, technischen Sicherheitsstandards (TSS), der Eskalationsmatrix und Trainingsmaterial, das dem Bereitstellen des Servers (110, 306) zugeordnet ist; und
Teilen der Dokumentation mit dem Anforderer über das Selbstbedienungsportal (330).

13. System (300) nach einem der vorstehenden Ansprüche, wobei die Serverbereitstellungsmaschine (106, 302) eine Vielzahl von Orchestrierungswerkzeugen umfasst, wobei jedem der Vielzahl von Orchestrierungswerkzeugen eine dedizierte Aufgabe zugewiesen ist, die dem Bereitstellen des Servers (110, 306) zugeordnet ist.

14. System (300) nach einem der vorstehenden Ansprüche, wobei die Serverbereitstellungsmaschine (106, 302) ferner konfiguriert ist, um mehrere Instanzen eines oder mehrerer Orchestrierungswerkzeuge der Vielzahl von Orchestrierungswerkzeugen zu erzeugen.

15. System (300) nach einem der vorstehenden Ansprüche, wobei die eine oder die mehreren Präferenzen das Auswählen eines präferierten Patch-Verwaltungssoftwareprogramms aus einem oder mehreren Patching-Verwaltungssoftwareprogrammen, eines präferierten Softwareprogramms für künstliche Intelligenz aus einem oder mehreren Softwareprogrammen für künstliche Intelligenz, eines präferierten Maschinenlernsoftwareprogramms aus einem oder mehreren Maschinenlernsoftwareprogrammen, eines präferierten Serverüberwachungssoftwareprogramms aus einem oder mehreren Serverüberwachungssoftwareprogrammen, eines präferierten Antivirensoftwareprogramms aus einem oder mehreren Antivirensoftwareprogrammen und eines präferierten Serverhärtungsstandards aus einem oder mehreren Serverhärtungsstandards umfassen.

## Revendications

1. Procédé (400) de provisionnement automatique d'un serveur (110, 306), le procédé étant **caractérisé par** :
la réception (402), par un moteur de provisionnement de serveur (106, 302), d'une demande de provisionnement de serveur à partir d'un demandeur par l'intermédiaire d'un portail libre-service (330), dans lequel la demande de provisionnement de serveur comprend une ou plusieurs exigences associées à une image de système d'exploitation (OS) et une ou plusieurs préférences de configuration de l'image OS ;
la recherche (404), par le moteur de provisionnement de serveur (106, 302), de l'image OS qui satisfait la ou les exigences dans un référentiel d'images OS (318) en interrogeant une base de données d'état (316) ;
la génération (406), par le moteur de provisionnement de serveur (106, 302), de l'image OS conformément à la ou aux exigences lorsque l'image OS n'est pas trouvée dans le référentiel d'images OS (318) ;
la configuration (408), par le moteur de provisionnement de serveur (106, 302), de l'image OS avec la ou les préférences ; et
la réalisation (410), par le moteur de provisionnement de serveur (106, 302), d'au moins l'un parmi : le partage de l'image OS configurée avec le demandeur et le déploiement du serveur (110, 306) à l'aide de l'image OS configurée.

2. Procédé (400) selon l'une quelconque des revendications précédentes, en outre **caractérisé par** la mise à jour, par le moteur de provisionnement de serveur (106, 302), des éléments de configuration (CI) associés au provisionnement du serveur (110, 306) dans une base de données de gestion de configuration (CMDB) (332).

3. Procédé (400) selon l'une quelconque des revendications précédentes, en outre **caractérisé par** :
la génération, par le moteur de provisionnement de serveur (106, 302), d'une documentation associée au provisionnement du serveur (110, 306), dans lequel la documentation comprend un ou plusieurs parmi : des instructions de travail associées à la configuration du serveur (110, 306), une conception évoluée (HLD), des guides d'installation intégrés (BIG), des normes de sécurité technique (TSS), une matrice de progression et un matériel d'entraînement associé au provisionnement du serveur (110, 306) ; et
le partage, par le moteur de provisionnement de serveur (106, 302), de la documentation avec le demandeur par l'intermédiaire du portail libre-service (330).

4. Procédé (400) selon l'une quelconque des revendications précédentes, en outre **caractérisé par** la génération, par le moteur de provisionnement de serveur (106, 302), de multiples instances d'un ou plusieurs outils d'orchestration pour le provisionnement du serveur (110, 306).

5. Procédé (400) selon l'une quelconque des revendications précédentes, en outre **caractérisé par** l'attribution, par le moteur de provisionnement de serveur (106, 302), d'une tâche dédiée associée au provisionnement du serveur (110, 306) à chacun d'un ou plusieurs outils d'orchestration.

6. Procédé (400) selon l'une quelconque des revendications précédentes, dans lequel la ou les préférences comprennent la sélection d'un programme logiciel de gestion de correctif préféré provenant d'un ou de plusieurs programmes logiciels de gestion de correctif, d'un programme logiciel d'intelligence artificielle préféré provenant d'un ou de plusieurs programmes logiciels d'intelligence artificielle, d'un programme logiciel d'apprentissage automatique préféré provenant d'un ou de plusieurs programmes logiciels d'apprentissage automatique, d'un programme logiciel de surveillance de serveur préféré provenant d'un ou de plusieurs programmes logiciels de surveillance de serveur, d'un programme logiciel antivirus préféré provenant d'un ou de plusieurs programmes logiciels antivirus, et d'une norme de renforcement de serveur préférée provenant d'une ou de plusieurs normes de renforcement de serveur.

7. Procédé selon l'une quelconque des revendications précédentes, dans lequel le déploiement du serveur (110, 306) comprend le déploiement d'un hyperviseur sur le serveur (110, 306) pour créer et exécuter une ou plusieurs machines virtuelles (VM) sur le serveur (110, 306), et dans lequel l'image OS configurée est utilisée par la ou les VM.

8. Système (300) de provisionnement automatique d'un serveur (110, 306), le système étant **caractérisé par** :
un moteur de provisionnement de serveur (106, 302) configuré pour :
recevoir une demande de provisionnement de serveur à partir d'un demandeur par l'intermédiaire d'un portail libre-service (330), dans lequel la demande de provisionnement de serveur comprend une ou plusieurs exigences associées à une image de système d'exploitation (OS) et une ou plusieurs préférences de configuration de l'image OS ;
interroger une base de données d'état (316) pour rechercher l'image OS qui satisfait la ou les exigences dans un référentiel d'images OS (318) ;
générer l'image OS conformément à la ou aux exigences lorsque l'image OS n'est pas trouvée dans le référentiel d'images OS (318) ;
configurer l'image OS avec la ou les préférences ; et
réaliser au moins l'un parmi : le partage de l'image OS configurée avec le demandeur et le déploiement du serveur (110, 306) à l'aide de l'image OS configurée.

9. Système (300) selon l'une quelconque des revendications précédentes, dans lequel le moteur de provisionnement de serveur (106, 302) comprend :
le référentiel d'images OS (318) stockant des images OS ; et
un ou plusieurs référentiels (320, 322) stockant au moins l'un parmi des modèles d'image OS, des programmes logiciels et outils de support, et des procédures, dans lequel le moteur de provisionnement de serveur (106, 302) génère l'image OS et configure l'image OS sur la base de l'au moins un parmi les modèles d'image OS, les programmes logiciels et outils de support, et les procédures.

10. Système (300) selon l'une quelconque des revendications précédentes, dans lequel le portail libre-service (330) comprend une interface utilisateur pour que le demandeur sélectionne la ou les exigences et la ou les préférences.

11. Système (300) selon l'une quelconque des revendications précédentes, dans lequel le moteur de provisionnement de serveur (106, 302) est en outre configuré pour mettre à jour des éléments de configuration (CI) associés au provisionnement du serveur (110, 306) dans une base de données de gestion de configuration (CMDB) (332).

12. Système (300) selon l'une quelconque des revendications précédentes, dans lequel le moteur de provisionnement de serveur (106, 302) est en outre configuré pour :
générer une documentation associée au provisionnement du serveur (110, 306), dans lequel la documentation comprend un ou plusieurs parmi : des instructions de travail associées à la configuration du serveur (110, 306), une conception évoluée (HLD), des guides d'installation intégrés (BIG), des normes de sécurité technique (TSS), une matrice de progression et un matériel d'entraînement associé au provisionnement du serveur (110, 306) ; et
partager la documentation avec le demandeur par l'intermédiaire du portail libre-service (330).

13. Système (300) selon l'une quelconque des revendications précédentes, dans lequel le moteur de provisionnement de serveur (106, 302) comprend une pluralité d'outils d'orchestration, dans lequel chacun de la pluralité d'outils d'orchestration est attribué à une tâche dédiée associée au provisionnement du serveur (110, 306).

14. Système (300) selon l'une quelconque des revendications précédentes, dans lequel le moteur de provisionnement de serveur (106, 302) est en outre configuré pour générer de multiples instances d'un ou plusieurs outils d'orchestration de la pluralité d'outils d'orchestration.

15. Système (300) selon l'une quelconque des revendications précédentes, dans lequel la ou les préférences comprennent la sélection d'un programme logiciel de gestion de correctif préféré provenant d'un ou de plusieurs programmes logiciels de gestion de correction, un programme logiciel d'intelligence artificielle préféré provenant d'un ou de plusieurs programmes logiciels d'intelligence artificielle, un programme logiciel d'apprentissage automatique préféré provenant d'un ou de plusieurs programmes logiciels d'apprentissage automatique, un programme logiciel de surveillance de serveur préféré provenant d'un ou de plusieurs programmes logiciels de surveillance de serveur, un programme logiciel antivirus préféré provenant d'un ou de plusieurs programmes logiciels antivirus, et une norme de renforcement de serveur préférée à partir d'une ou de plusieurs normes de renforcement de serveur.
